# EUROPÄISCHE PATENTSCHRIFT

(11) **EP 3 656 912 B1**
(45) Veröffentlichungstag und Bekanntmachung des Hinweises auf die Patenterteilung: **10.04.2024**
(21) Anmeldenummer: 19209718.6
(22) Anmeldetag: 18.11.2019
(51) Int. Cl.: D06F 67/04, D06F 93/00, D06F 95/00

(54) **VERFAHREN UND VORRICHTUNGEN ZUM ZUFÜHREN VON WÄSCHESTÜCKEN ZU EINER EINGABEMASCHINE**
METHOD AND DEVICES FOR FEEDING LAUNDRY ITEMS TO AN INSERTION MACHINE
PROCÉDÉ ET DISPOSITIFS D'ACHEMINEMENT DE LINGE VERS UNE ENGAGEUSE AUTOMATIQUE

(30) Priorität: 23.11.2018 DE 102018129570
(43) Veröffentlichungstag der Anmeldung: 27.05.2020
(73) Patentinhaber: Herbert Kannegiesser GmbH, 32602 Vlotho (DE)
(72) Erfinder: Heinz, Engelbert, 32602 Vlotho (DE); Bringewatt, Wilhelm, 32457 Porta Westfalica (DE); Nolte, Markus, 32479 Hille (DE)
(74) Vertreter: Meissner Bolte Partnerschaft mbB

(56) Entgegenhaltungen:
- WO-A2-2005/038121
- DD-A1- 77 950
- DE-B1- 1 760 450
- GB-A- 2 081 749
- US-A- 3 568 342
- US-A- 5 169 282
- US-A1- 2008 298 930

## Beschreibung

Die Erfindung betrifft ein Verfahren zum Zuführen von Wäschestücken zu einer Eingabemaschine gemäß dem Oberbegriff des Anspruchs 1. Des Weiteren betrifft die Erfindung eine Vorrichtung zum Zuführen von Wäschestücken zu einer Eingabemaschine gemäß dem Oberbegriff des Anspruchs 6.

Eingabemaschinen dienen dazu, Wäschestücke auszubreiten und im ausgebreiteten Zustand einer Wäschebehandlungseinrichtung, insbesondere einer Mangel, zuzuführen.

Aus Rationalisierungsgründen ist man bestrebt, Wäschestücke, und zwar vorzugsweise gewaschene Wäschestücke, weitestgehend automatisiert der Eingabemaschine zuzuführen. Das muss mit benachbarten Ecken einer Kante des Wäschestücks geschehen.

Es ist bekannt, die üblicherweise als Wäscheposten oder Wäschehaufen nach dem Waschen und gegebenenfalls Entwässern anfallenden Wäschestücke automatisch aus dem Wäschehaufen oder Wäscheposten herauszugreifen und dabei oder nachfolgend zu vereinzeln. Es hat sich bisher als problematisch erwiesen, das jeweilige vorzugsweise an einer Klammer hängende vereinzelte Wäschestück automatisch der Eingabemaschine zuzuführen, weil das mit benachbarten Ecken derjenigen Kante des Wäschestücks erfolgen muss, die von der Eingabemaschine ausgestreckt und der Wäschebehandlungseinrichtung, insbesondere Mangel, zugeführt wird. Diese dann in Zuführrichtung des Wäschestücks zur Mangel oder dergleichen voraneilende Kante wird dann als Vorderkante des Wäschestücks definiert.

Aus der US 5 169 282 A ist ein Verfahren zum Ausbreiten eines Flachwäschestücks und Zuführen desselben zu einer Eingabemaschine bekannt. Von einer Bedienungsperson wird zunächst ein von einer Ecke ausgehender Randabschnitt in eine breite Klammer eines Förderers eingehängt. Dadurch hängt von der breiten Klammer ein von zwei benachbarten Ecken begrenzter Rand des Wäschestücks senkrecht herunter. Die Ecken dieses Rands werden dann von einzelnen Klammern eines anderen Förderers ergriffen. Die Klammern fahren das Wäschestück vor die Eingabemaschine, wo durch Auseinanderfahren der Klammern das Wäschestück zur Übergabe an die Eingabemaschine ausgestreckt wird.

Die WO 2005/038121 A2 offenbart ein Verfahren und eine Vorrichtung zum Zuführen von Wäschestücken zu beispielsweise einer Eingabemaschine. Die Vorrichtung verfügt über einen Zuförderer, dessen Breite sich in Zuführrichtung des Wäschestücks zur Eingabemaschine vergrößert. Über einen anfänglichen schmalen Auflegebereich des Zuförderers wird manuell ein einzelnes Wäschestück U-förmig herübergehängt. Infolge des sich in Zuführrichtung verbreiternden Zuförderers wird dieses Wäschestück quer zur Zuführrichtung ausgestreckt. Dadurch bildet sich ein gestreckter Querrand des Wäschestücks, dessen gegenüberliegende Ecken von Spreizklammern der Eingabemaschine übernommen werden.

Die GB 2 081 749 A betrifft eine Eingabemaschine zum Ausstrecken und Eingeben eines Wäschestücks in eine Mangel. Mit dem gestreckten vorderen Rand wird das Wäschestück auf den Anfang eines ersten Gurtförderers der Eingabemaschine aufgelegt. Von diesem ersten Gurtförderer und mehreren nachfolgenden Gurtförderern wird das Wäschestück dann in eine Mangel eingegeben.

Der Erfindung liegt die Aufgabe zugrunde, ein Verfahren und eine Vorrichtung zum zuverlässigen mindestens weitestgehend automatischen, vorzugsweise vollautomatischen, Zuführen von Wäschestücken zu einer Eingabemaschine zu schaffen.

Ein Verfahren zur Lösung dieser Aufgabe weist die Maßnahmen des Anspruchs 1 auf. Demnach ist es vorgesehen am vereinzelten Wäschestück vor der Zuführung desselben zur Eingabemaschine zwei benachbarte Ecken einer Kante auszubilden, indem das Wäschestück in eine U-artige bzw. U-förmige Konfiguration gebracht und danach in Zuführrichtung auseinandergezogen wird. Durch die Überführung des Wäschestücks in eine U-artige Konfiguration bilden sich am Ende benachbarter Schenkel Ränder und/oder Enden, insbesondere Zipfel, des Wäschestücks aus, in deren Bereichen benachbarte Ecken einer Kante des Wäschestücks liegen. Durch anschließendes Auseinanderziehen des Wäschestücks entwirren sich mindestens die Enden der beiden Schenkel und es kommen die gesuchten benachbarten Ecken der Kante zum Vorschein. Insbesondere werden die benachbarten Ecken so freigelegt, dass aus den Enden bzw. Zipfeln die benachbarten Ecken einer Kante des Wäschestücks herausgebildet werden. Dadurch kann das Wäschestück dann vorzugsweise vollautomatisch der Eingabemaschine zugeführt werden, die dann mit den nach dem erfindungsgemäßen Verfahren erhaltenen Ecken das Wäschestück ausbreitet und der Wäschebehandlungseinrichtung zuführt.

Das Verfahren sieht es vor, dass das Wäschestück nach dem Vereinzeln von einer Klammer herunterhängt die es soweit über eine das Wäschestück anschließend auseinanderziehende Ausstreifeinrichtung zieht, dass sich dabei die U-förmige Konfiguration des Wäschestücks ausbildet. Nach dem vorzugsweise teilweisen Aufziehen oder Herüberziehen des von der Klammer herunterhängenden Wäschestücks über die Ausstreifeinrichtung lässt dann die Klammer das Wäschestück los. Hierdurch wird eine Möglichkeit zur Ausbildung der U-förmigen Ausgangskonfiguration des Wäschestücks geschaffen.

In der Ausstreifeinrichtung wird das Wäschestück von mindestens zwei in Zuführrichtung aufeinanderfolgenden Gurtfördern beim Transport in Zuführrichtung zur Eingabemaschine auseinandergezogen. Dadurch finden der Transport des Wäschestücks in Richtung zur Eingabemaschine und das Auseinanderziehen des Wäschestücks wenigstens größtenteils gleichzeitig statt. Auf diese Weise wird die Taktzeit der Zuführung des Wäschestücks zur Eingabemaschine nicht oder wenigstens nicht nennenswert durch das Ausstreifen des Wäschestücks verlängert.

Es ist vorgesehen, die Geschwindigkeit der in Zuführrichtung aufeinanderfolgenden Gurtförderer, insbesondere auch mindestens teilweise übereinanderliegenden Gurtförderer (Sandwichförderer), in Zuführrichtung zunehmen zu lassen. Dadurch entsteht beim langsameren Gurtförderer ein Schlupf zwischen seinem mindestens einen Fördergurt und dem Wäschestück. Dieser Schlupf führt zum Auseinanderziehen des Wäschestücks in Zuführrichtung und/oder zu mindestens einer Unterstützung des Auseinanderziehens des Wäschestücks.

Das Verfahren sieht es außerdem vor, dass das Wäschestück von der Ausstreifeinrichtung in Zuführrichtung weitertransportiert wird. Dabei wird das Wäschestück von der Ausstreifeinrichtung in Zuführrichtung auseinandergezogen.

Insbesondere werden von einer Ausgangssituation, in der das in der U-förmigen Konfiguration auf der Ausstreifeinrichtung aufgelegte Wäschestück noch übereinanderliegende und/oder überlappende Bereiche aufweist, diese Bereiche ganz oder zumindest größtenteils beseitigt. Dadurch bilden sich im Verlauf der Ausstreifeinrichtung in Zuführrichtung verlaufende gegenüberliegende Kanten des Wäschestücks aus. Dabei werden die ursprünglichen Enden und/oder Zipfel des Wäschestücks aufgelöst und mindestens zwei benachbarte Ecken, vorzugsweise alle vier Ecken, des Wäschestücks voneinander beabstandet. So bilden sich benachbarte Ecken mindestens einer quer zur Zuführrichtung verlaufenden Kante aus. Bei dieser Kante handelt es sich zunächst noch um die quer zur Zuführrichtung verlaufende Hinterkante des Wäschestücks.

Vorzugsweise werden beim erfindungsgemäßen Verfahren benachbarte Ecken einer Hinterkante des jeweiligen Wäschestücks herausgebildet, die dann während des Zuführens des Wäschestücks zur Eingabemaschine und einer dabei erfolgenden Umorientierung des Wäschestücks zur Vorderkante desselben wird.

Bevorzugt wird das an der Klammer hängende Wäschestück durch ein quergerichtet zur Zuführrichtung des Wäschestücks zur Eingabemaschine erfolgendes Verfahren der Klammer und ein Öffnen der Klammer bei sich etwa mittig über der Ausstreifeinrichtung befindendem Wäschestück am Anfang der Ausstreifeinrichtung abgelegt. Dabei kommt die U-förmige Konfiguration des Wäschestücks am Anfang der Ausstreifeinrichtung zustande. Dieses Ablegen erfolgt mit einem mittennahen Bereich des Wäschestücks, der idealerweise auch im mittleren Bereich desselben sein kann. Der mittennahe Bereich befindet sich vorzugsweise in einem zentralen Bereich derjenigen Kante, die von den auszubildenden Ecken des Wäschestücks begrenzt wird.

Gemäß einer vorteilhaften Weiterbildungsmöglichkeit des Verfahrens ist es vorgesehen, mindestens einen ersten Gurtförderer wenigstens während des anfänglichen Auseinanderziehens des Wäschestücks gegen die Zuführrichtung, insbesondere gegensinnig zu dem mindestens einen auf den ersten Gurtförderer folgenden Gurtförderer anzutreiben. Dabei wird ein noch auf dem ersten Gurtförderer liegender hinterer Teil des Wäschestücks vom ersten Gurtförderer entgegen der Zuführrichtung bewegt, während der übrige, sich auf dem nachfolgenden Gurtförderer liegende Teil des Wäschestücks von mindestens diesem nachfolgenden Förderer in Zuführrichtung transportiert wird. Dadurch kommt ein sehr wirkungsvolles Auseinanderziehen und/oder Strecken des Wäschestücks zustande, was die Ausbildung der benachbarten Ecken einer vorzugsweise hinteren quer zur Zuführrichtung verlaufenden Kante des Wäschestücks zumindest begünstigt.

Eine bevorzugte Ausgestaltungsmöglichkeit des Verfahrens sieht es vor, den auf dem Anfang des ersten Gurtförderers aufliegenden mittigen oder mittennahen Bereich des Wäschestücks vorzugsweise an einer hintersten Stelle während des anfänglichen Ausstreckens des Wäschestücks festzuhalten und/oder zurückzuhalten. Dadurch wird von mindestens einem Gurtförderer der vordere Großteil des Wäschestücks in Zuführrichtung weitertransportiert. Dabei kommt es zu einem wirkungsvollen anfänglichen Ausstreifen des Wäschestücks. Hiernach wird die Fixierung der hintersten Stelle des Wäschestücks auf dem Anfang des ersten Gurtförderers gelöst, so dass dann das Wäschestück weiter und insbesondere auch abschließend ausgebreitet wird durch die aufeinanderfolgenden Gurtförderer und ihre in Zuführrichtung zunehmenden Transportgeschwindigkeiten.

Eine Vorrichtung zur Lösung der eingangs genannten Aufgabe weist die Merkmale des Anspruchs 6 auf. Diese Vorrichtung zeichnet sich aus durch einen Förderer mit mindestens einer Klammer zum Einhängen des jeweiligen Wäschestücks und eine Fördererkaskade aus. Die in Zuführrichtung zur Wäschebehandlungseinrichtung aufeinanderfolge Gurtförderer verfügen über unterschiedliche Transportgeschwindigkeiten, wobei der vordere, erste Gurtförderer mit einer geringeren Transportgeschwindigkeit arbeitet als der darauffolgende Gurtförderer. Falls sich in Zuführrichtung mindestens ein weiterer Gurtförderer anschließt, ist dessen Transportgeschwindigkeit wiederum größer als die des mittleren (zweiten) Gurtförderers. Analog wird bei mehr als drei aufeinanderfolgenden Gurtförderern vorgegangen. Durch die unterschiedlichen Transportgeschwindigkeiten der aufeinanderfolgenden Gurtförderer nimmt die Transportgeschwindigkeit in Zuführrichtung sukzessiv, insbesondere stufenweise, zu. Das allein oder in Kombination mit einzelnen oder mehreren der weiter unten genannten Maßnahmen führt zum wirksamen Auseinanderziehen des jeweiligen Wäschestücks, um mindestens zwei benachbarte Ecken einer Kante, und zwar insbesondere Querkante, des Wäschestücks auszubilden.

Eine vorteilhafte Ausgestaltungsmöglichkeit der Vorrichtung sieht es vor, dass der oder jeder auf den ersten Gurtförderer folgende Gurtförderer als sandwichartiger Doppelgurtförderer mit einem unteren Gurtförderer und einem oberen Gurtförderer ausgebildet ist. Der obere und der untere Gurtförderer können dabei gleich oder auch unterschiedlich, vor allem unterschiedlich lang, ausgebildet sein. Insbesondere ist es denkbar, dass die Rauheiten bzw. Reibbeiwerte der mit dem Wäschestück in Kontakt kommenden Gurte unterschiedlich ausgebildet sind.

Durch den mindestens einen sandwichartigen Gurtförderer ist es möglich, auf den dazwischenliegenden Teil des jeweiligen Wäschestücks eine gezielte Haltekraft auszuüben, und den jeweiligen sandwichartigen Gurtförderer derart einzustellen, dass er stark am Wäschestück, insbesondere dem jeweiligen voraneilenden Abschnitt desselben, zieht. Das jeweilige Wäschestück wird dadurch insgesamt von den aufeinanderfolgenden Gurtförderern, vor allem wegen ihrer unterschiedlichen und in Zuführrichtung größer werdenden Transportgeschwindigkeit, wirksam in Zuführrichtung gestreckt, damit das Wäschestück im erforderlichen Umfange auseinandergezogen werden kann. Der Abstand des oberen und unteren Gurtförderers des sandwichartigen Gurtförderers kann auch geändert werden, um Anpassungen an unterschiedliche Wäschestücke, insbesondere hinsichtlich ihrer Lage, Anzahl und der Art ihres Gewebes (glattes Gewebe oder Frottee) vorzunehmen.

Es ist denkbar, die Vorrichtung so weiterzubilden, dass der erste Gurtförderer in seiner Transportrichtung reversierbar ist. Insbesondere lässt sich so der erste Gurtförderer nach dem Aufziehen und Auflegen des Wäschestücks auf denselben mit einer Transportrichtung antreiben, die gegen die Zuführrichtung läuft. Dadurch kann ein Teil des Wäschestücks zum Anfang des ersten Gurtförderers bewegt werden, und zwar so weit, dass ein Teil des Wäschestücks vor dem Anfang des ersten Gurtförderers herunterhängt. Dadurch wird die Reibung des Wäschestücks auf der dazu gerichteten Seite des Gurts des ersten Gurtförderers erhöht.

Besonders vorteilhaft ist es, den ersten Gurtförderer in eine Förderrichtung, die gegen die Zuführrichtung zeigt, entgegengesetzt zum mindestens einen nachfolgenden Gurtförderer anzutreiben, wenn ein vorderer Teil des Wäschestücks schon auf dem nachfolgenden Gurtförderer liegt, insbesondere in einem Spalt zwischen dem oberen und unteren Gurtförderer des sandwichartig ausgebildeten nachfolgenden Gurtförderers. Dadurch erfolgt ein besonders wirksames Ausstrecken bzw. Ausstreifen des noch vor dem nachfolgenden zweiten Gurtförderer liegenden Teils des Wäschestücks und/oder des vor dem ersten Gurtförderer abschnittsweise herunterhängenden hinteren Teils des Wäschestücks. Das führt dazu, dass ein hinterer Teil des Wäschestücks auf dem ersten Gurtförderer und ein vorauseilender Teil des Wäschestücks auf mindestens dem auf den ersten Gurtförderer folgenden zweiten Gurtförderer auseinandergezogen werden. Das ist besonders wirksam, wenn der zweite Gurtförderer und/oder gegebenenfalls jeder nachfolgende Gurtförderer als sandwichartige Gurtförderer mit einem oberen und unteren Gurtförderer ausgebildet sind.

Eine andere denkbare Ausgestaltungsmöglichkeit der Vorrichtung sieht es vor, dem ersten Gurtförderer, insbesondere seinem Anfangsbereich, ein Rückhaltemittel zuzuordnen.

Die Vorrichtung kann mit einer Steuerung versehen sein, welche die Rückhalteeinrichtung in Abhängigkeit vom fortgeschrittenen Auseinanderziehen des Wäschestücks steuert. Beispielsweise kann die Rückhalteeinrichtung den hinteren Randbereich des Wäschestücks solange festhalten, bis der mindestens eine auf den ersten Gurtförderer folgende Gurtförderer eine Zugkraft auf das Wäschestück ausübt, die sich bis zur Rückhalteeinrichtung erstreckt und/oder eine bestimmte Zugkraft auf den von der Rückhalteeinrichtung noch fixierten hinteren des Wäschestücks ausgeübt wird. Dadurch wird zum einen sichergestellt, dass das Wäschestück ausreichend auseinandergezogen wird und zum anderen eine übermäßige Zugkraft auf das Wäschestück verhindert, indem das Wäschestück beim Auseinanderziehen nicht übermäßig gedehnt und dadurch geschädigt werden könnte.

Ein bevorzugtes Ausführungsbeispiel der Erfindung wird nachfolgend anhand der Zeichnung näher erläutert. In dieser zeigen:
- Fig. 1: eine perspektivische Darstellung einer erfindungsgemäßen Vorrichtung,
- Fig. 2: eine vergrößerte Einzelheit II aus der Fig. 1, und

- Fig. 3: eine Darstellung der Einzelheit der Fig. 2 in einem anderen Verfahrensstadium.

Die in den Figuren gezeigte Vorrichtung dient zum automatischen Zuführen und/oder Eingeben von Wäschestücken 10 in eine Eingabemaschine 11 zum Ausbreiten und Zuführen der Wäschestücke 10 zu einer Mangel oder einer sonstigen Wäschebehandlungseinrichtung.

Die erfindungsgemäße Vorrichtung eignet sich grundsätzlich für Wäschestücke 10 aller Art, bevorzugt aber sogenannte Flachwäschestücke. Das sind vor allem Tischdecken, Servietten, Bettbezüge, Kopfkissenbezüge und Bettlaken.

Die Vorrichtung verfügt in Zuführrichtung 12 gesehen vor der Eingabemaschine 11 über einen automatischen Vereinzeler 13 und eine darauffolgende Ausstreifeinrichtung 14. Die Ausstreifeinrichtung 14 befindet sich zwischen dem Vereinzeler 13 und der Eingabemaschine 11. Die Ausstreifeinrichtung 14 streift das jeweilige Wäschestück 10 insbesondere in Zuführrichtung 12 aus und übergibt es als ausgestreiftes Wäschestück 10 automatisch an die Eingabemaschine 11.

Der Vereinzeler 13 dient zum gezielten automatischen Herausgreifen vorzugsweise eines einzelnen Wäschestücks 10 aus einem Wäschehaufen 15. Das automatische Herausgreifen des vorzugsweise einen jeweiligen Wäschestücks 10 aus dem Wäschehaufen 15 erfolgt gesteuert aufgrund mindestens einer Aufnahme einer bildgebenden Einrichtung, beispielsweise mindestens einer Kamera 16 in der Nähe des Wäschehaufens 15. Eine Bildauswertungseinrichtung steuert anhand der Aufnahmen der Kamera 16 einen entlang einer Steigstrecke 17 auf- und abbewegbaren Greifer 18. Der Greifer 18 übergibt das von ihm ergriffene, vorzugsweise einzelne, Wäschestück 10 an eine nachfolgende Bereitstellungseinrichtung 19 des Vereinzelers 13. Die Bereitstellungseinrichtung 19 führt gegebenenfalls eine Vereinzelung mehrerer gleichzeitig vom Greifer 18 ergriffener Wäschestücke 10 durch und hält das vereinzelte (einzige) Wäschestück 10 an einer ersten Ecke 20 bereit zur automatischen Übergabe bzw. Übernahme durch die Ausstreifeinrichtung 14. Dabei hängt das Wäschestück 10 von der von der Bereitstellungseinrichtung 19 des Vereinzelers 13 gehaltenen ersten Ecke 20 frei herunter.

Die auf den Vereinzeler 13 folgende Ausstreifeinrichtung 14 verfügt über eine quer zur Zuführrichtung 12 verlaufende, horizontale Schiene 21, an der mindestens eine Klammer 22 quer zur Zuführrichtung 12 hin- und herverfahrbar ist. Die Schiene 21 mit der Klammer 22 ist derart in Zuführrichtung 12 gesehen hinter der Stelle, an der die Bereitstellungseinrichtung 19 des Vereinzelers 13 ein an der ersten Ecke 20 hängendes Wäschestück 10 bereithält, angeordnet, dass von der Bereitstellungseinrichtung 19 das Wäschestück 10 mit der ersten Ecke 20 automatisch an die Klammer 22 an der Schiene 21 übergebbar ist bzw. die Klammer 22 die erste Ecke 20 des Wäschestücks 10 von der Bereitstellungseinrichtung 19 übernehmen kann.

Nach der Übernahme durch oder an die Ausstreifeinrichtung 14 hängt das Wäschestück 10 von der ersten Ecke 20 an der Klammer 22 herunter. Die Höhe der Schiene 21 mit der Klammer 22 ist dabei so gewählt, dass auch die größten Wäschestücke 10 frei von der Klammer 22 herunterhängen können, ohne den Boden zu berühren. Dabei befindet sich die Klammer 22 in einer solchen Position auf der Schiene 21, dass sich das von der Klammer 22 herunterhängende Wäschestücke 10 seitlich neben einem vorderen Ablegebereich 23 einer sich von hieraus in Zuführrichtung 12 zur Eingabemaschine 11 erstreckenden Fördererkaskade 24 der Bereitstellungseinrichtung 19 befindet

Ein von einem Sensor 25, insbesondere Sender, ausgehender horizontaler Sensorstrahl 26, der zum Beispiel eine Lichtschranke bildet, oder ein sonstiges Detektionsmittel, beispielsweise eine Kamera, befindet sich dort, wo das Wäschestück 10 neben dem Ablegebereich 23 der Fördererkaskade 24 von der Klammer 22 herunterhängt. Der Sensorstrahl 26 und insbesondere der diesen erzeugende Sensor 25 sind mit einem solchen Abstand vom Boden angeordnet, dass auch kleine Wäschestücke 10 den Sensorstrahlen 26 unterbrechen, also in die Lichtschranke hineinragen, wenn sich das Wäschestück 10 noch neben dem Ablegebereich 23 befindet.

Die das Wäschestück 10 haltende Klammer 22 wird längs der Schiene 21 quer zur Zuführrichtung 12 verfahren, wobei ein mittlerer Bereich des Wäschestücks 10 quer über den Ablegebereich 23 am Anfang der Fördererkaskade 24 gezogen wird. Wenn dabei das untere Ende des Wäschestücks 10 den Sensorstrahl 26 freigibt, kann aus den bekannten fixen Positionen des Sensors 25 und/oder des Sensorstrahls 26 sowie der Klammer 22, insbesondere ihre Höhe über dem Boden, die Länge des von der Klammer 22 herunterhängenden Wäschestücks 10, wobei es sich auch um die Breite des Wäschestücks 10 handeln kann, rechnerisch ermittelt werden. Daraufhin wird die Klammer 22 längs der Schiene 21 weiterhin so verfahren, dass der unter dem Ablegebereich 23 sich befindende Teil des Wäschestücks 10 weiter quergerichtet über den Ablegebereich 23 gezogen wird.

Das weitere Verfahren der Klammer 22 längs der Schiene 21 wird gestoppt, wenn die Hälfte der rechnerisch ermittelten Länge bzw. Breite des Wäschestücks 10, also ein mittlerer Bereich desselben, sich etwa über dem Ablegebereich 23 befindet. Die Klammer 22 lässt dann die erste Ecke 20 des Wäschestücks 10 los. Das Wäschestück 10 wird dadurch etwa mittig, mit einem mittigen Bereich oder einem mittennahen Bereich, über dem Ablegebereich 23 abgelegt. Das Wäschestück 10 befindet sich dann in einer U-förmigen bzw. U-artigen Konfiguration mit auf beiden Seiten vom Ablegebereich 23 herunterhängenden, vorzugsweise etwa gleich langen, Endabschnitten auf dem Ablegebereich 23.

Die Fördererkaskade 24 besteht aus mehreren, hintereinander und übereinander angeordneten Gurtförderern 27. Diese können gleich, insbesondere gleich lang, ausgebildet sein oder - wie im gezeigten Ausführungsbeispiel - die in Zuführrichtung 12 aufeinanderfolgenden Gurtförderer der Fördererkaskade 24 über eine zunehmend größere Länge verfügen.

Im gezeigten Ausführungsbeispiel wird die Fördererkaskade 24 gebildet aus drei in Zuführrichtung 12 aufeinanderfolgenden unteren Gurtförderern 27, 28 und 29 und darüber liegenden ebenfalls in Zuführrichtung 12 aufeinanderfolgenden oberen Gurtförderer 30, 31 und 32. Die sandwichartig übereinander angeordneten unteren Gurtförderer 27 bis 29 und oberen Gurtförderer 30 bis 32 bilden so drei aufeinanderfolgende Gurtförderpaare der Fördererkaskade 24. Es ist auch denkbar, dass die Fördererkaskade 24 nur zwei oder auch mehr als drei Gurtförderpaare aufweist. Die Längen der unteren Gurtförderer 27, 28, 29 nehmen in Zuführrichtung 12 zu. Ebenso nehmen die Längen der oberen Gurtförderer 30, 31, 32 in Zuführrichtung 12 zu. Der untere Gurtförderer 28 und der diesem zugeordnete obere Gurtförderer 31 sind gleich lang. Ebenso sind der untere Gurtförderer 29 und der diesem zugeordnete obere Gurtförderer 32 gleich lang. Jedoch ist der dem anfänglichen (ersten) unteren Gurtförderer 27 zugeordnete obere Gurtförderer 30 kürzer als der untere Gurtförderer 27 zur Ausbildung des freiliegenden bzw. vom oberen Gurtförderer 30 frei gelassenen Ablegebereichs 23.

Im gezeigten Ausführungsbeispiel verlaufen alle Gurtförderer 27 bis 32 der Fördererkaskade 24 in einer gleichen, horizontalen Ebene. Es ist aber denkbar, dass alle Gurtförderer 27 bis 32 der Fördererkaskade 24 in Zuführrichtung 12 gesehen gradlinig ansteigend oder abfallend zur Eingabemaschine 11 verlaufen. Auch ist es denkbar, dass die Richtungen der aufeinanderfolgenden unteren Gurtförderer 27 bis 29 und/oder oberen Gurtförderern 30 bis 32 voneinander abweichen, also keine durchgehende gerade Linie bilden. Schließlich ist es auch denkbar, dass mindestens einige Gurtförderer 27 bis 32 einen bogenförmigen bzw. gekrümmten Verlauf aufweisen.

Alle Gurtförderer 27 bis 32 der Fördererkaskade 24 sind gleich breit. Die Gurtförderer 27 bis 32 verfügen über eine Breite, die im Verhältnis zu ihrer Länge als schmal bezeichnet werden kann, so dass eine schmale, streifenförmige Fördererkaskade 24 entsteht. Dadurch können die Wäschestücke 10 im Verlauf der Fördererkaskade 24 beidseitig mit vorzugsweise gleichen Längen seitlich von der Fördererkaskade 24 herunterhängen. So behalten die Wäschestücke 10 beim gesamten Förderweg der Fördererkaskade 24 bis zur Eingabemaschine 11 ihre U-förmige Konfiguration bei.

Alle aufeinanderfolgenden Gurtförderer 27 bis 32 der Fördererkaskade 24 sind übereinanderliegend angeordnet, so dass ihre Trume, also die Obertrume der unteren Gurtförderer 27 bis 29 und die Untertrume der oberen Gurtförderer 30, 31 und 32 aneinander anliegen, während sich zwischen den unteren Gurtförderern 27 bis 29 und den oberen Gurtförderern 30 bis 32 keine Wäschestücke 10 befinden. Die Folge ist, dass Wäschestücke 10 zwischen den unteren Gurtförderern 27 bis 29 und oberen Gurtförderern 30 bis 32 von den zueinander gerichteten Trumen derselben eingeklemmt in Zuführrichtung 12 weitertransportierbar sind unter Mitnahme der Wäschestücke 10 mit Reibschluss zwischen den Obertrumen der unteren Gurtförderer 27 bis 29 und den Untertrumen der oberen Gurtförderer 30 bis 32.

Der vordere untere Gurtförderer 27 und der darüberliegende obere Gurtförderer 30 werden mit gleicher Umlaufgeschwindigkeit ihrer Trume angetrieben. Das Gleiche gilt für den unteren Gurtförderer 28 und den ihm zugeordneten oberen Gurtförderer 31 sowie den unteren Gurtförderer 29 sowie den diesem zugeordneten zweiten Gurtförderer 32. Jedoch nehmen die Umlaufgeschwindigkeiten der Trume der einzelnen paarweise übereinander angeordneten Gurtförderer 27 und 30, 28 und 31 sowie 29 und 32 in Zuführrichtung 12 zu. Das heißt, die Umlaufgeschwindigkeit der Trume des unteren Gurtförderers 28 und des diesem zugeordneten oberen Gurtförderers 31 ist größer als die Umlaufgeschwindigkeit des anfänglichen unteren Gurtförderers 27 und des ihm zugeordneten oberen Gurtförderers 30. Hiergegen ist die Umlaufgeschwindigkeit der Trume des vor der Eingabemaschine 11 sich befindenden unteren Gurtförderers 29 und des diesem zugeordneten oberen Gurtförderers 32 größer als die Umlaufgeschwindigkeit der Trume des mittleren unteren Gurtförderers 28 und des diesem zugeordneten oberen Gurtförderers 31.

Es ist auch denkbar, dass die Umlaufrichtung des in Zuführrichtung 12 gesehenen vorderen, anfänglichen unteren Gurtförderers 27 und des ihm zugordneten oberen Gurtförderers 30 bei Bedarf umkehrbar ist, so dass die Förderrichtung der vorderen Gurtförderer 27 und 30 zeitweise, insbesondere kurzzeitig, gegen die Zuführrichtung 12 und die Transportrichtungen der Gurtförderpaare 28 und 31 sowie 29 und 32 gerichtet ist.

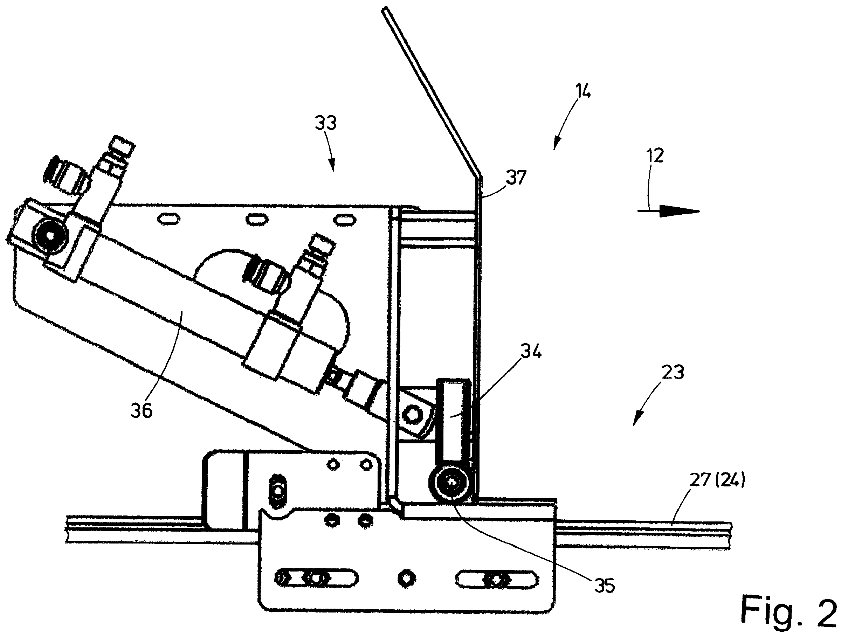

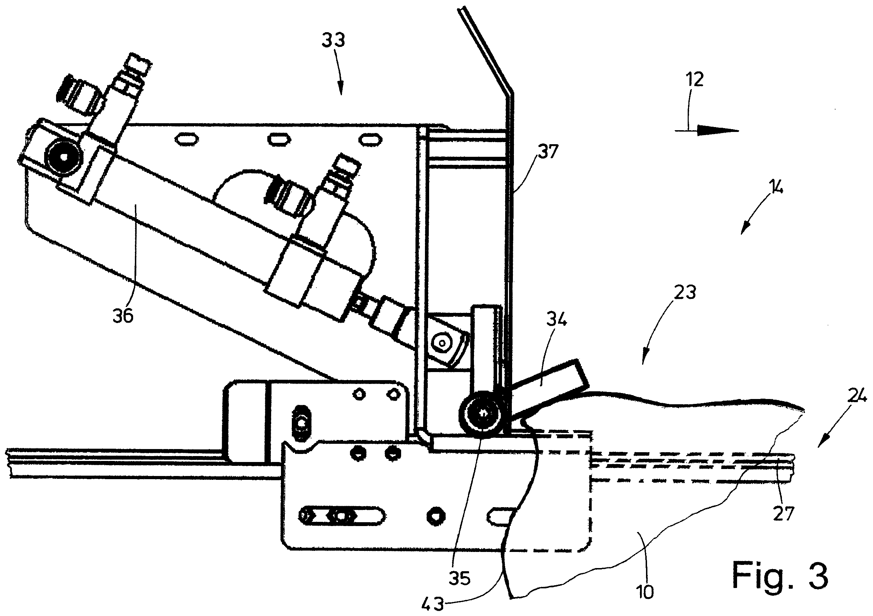

Die hier gezeigte Vorrichtung weist eine Rückhalteeinrichtung 33 auf, die in den Fig. 2 und 3 detailliert dargestellt ist. Die Rückhalteeinrichtung 33 ist am Anfang der Fördererkaskade 24 angeordnet, und zwar an einer zum Vereinzeler 13 weisenden, vorzugsweise äußersten, Stelle des Ablegebereichs 23 des Wäschestücks 10 auf der Fördererkaskade 24 und direkt hinter der Bereitstellungseinrichtung.

Die Rückhalteeinrichtung 33 verfügt über mindestens einen Klemmfinger 34. Der Klemmfinger 34 ist so ausgebildet, dass er den auf dem Ablegebereich 23 aufliegenden mittleren Abschnitt des jeweiligen Wäschestücks 10 an einem zum Klemmfinger 34 gerichteten Randbereich festklemmt und dadurch mindestens anfänglich zurückhalten kann. Vom Klemmfinger 34 ist das noch nicht auseinandergezogene Wäschestück 10 auf dem Ablegebereich 23 temporär fixierbar.

Bei der hier gezeigten Rückhalteeinrichtung 33 ist der Klemmfinger 34 um eine horizontale, quer zur Zuführrichtung 12 verlaufende Drehachse 35 verschwenkbar. Das geschieht gemäß den Darstellungen der Fig. 2 und 3 durch einen Pneumatikzylinder 36. Das Verschwenken des Klemmfingers 34 kann aber auch durch einen anderen Antrieb, beispielsweise einen an der Drehachse 35 angreifenden Servomotor, erfolgen.

In der Fig. 2 ist die hochgeschwenkte Ausgangsstellung des Klemmfingers 34 dargestellt. Der Klemmfinger 34 befindet sich dann vollständig hinter einem teilweise senkrecht verlaufenden Leitblech 37. Das Leitblech 37 steht senkrecht über dem Ablegebereich 23 hoch und begrenzt das zum Vereinzeler 13 weisende Ende des Ablegebereichs 23.

Die Fig. 3 zeigt den Klemmfinger 34 in seiner aktiven Stellung, in der er einen hinteren Bereich des auf den Ablegebereich 23 abgelegten mittigen Teils des Wäschestücks 10 festklemmt und dadurch zurückhält. Die Klemmkraft des Klemmfingers 34 ist durch den Luftdruck, womit der Pneumatikzylinder 36 beaufschlagt wird, variierbar und einstellbar. Dieser Luftdruck des Pneumatikzylinders 36 wird vorzugsweise während der Dauer der beabsichtigten Klemmung des Wäschestücks 10 insbesondere unverändert aufrechterhalten.

Der Rückhalteeinrichtung 33 ist mindestens ein Sensor oder dergleichen zugeordnet, der die Aufhebung der Klemmung des Wäschestücks 10 vom Klemmfinger 34 steuert. Das kann von der Zugkraft geschehen, die das zurückgehaltende Wäschestück 10 auf den Klemmfinger 34 ausübt, aber auch alternativ oder zusätzlich danach, wie weit ein vom Klemmfinger 34 nicht fixierter vorderer Teil des Wäschestücks 10 schon in die Fördererkaskade 24, nämlich zwischen einem oder mehreren der unteren Gurtförderer 27, 28, 29 oder oberer Gurtförderer 30, 31, 32, eingelaufen ist.

Bei der hier gezeigten Vorrichtung mit der Rückhalteeinrichtung 33 braucht der untere Gurtförderer 27 oder gegebenenfalls der ihm zugeordnete obere Gurtförderer 30 zum anfänglichen Auseinanderziehen des Wäschestücks 10 nicht gegen die Zuführrichtung 12 gerichtet angetrieben zu werden. Der untere Gurtförderer 27 und/oder der obere Gurtförderer 30 brauchen dann nicht reversierbar zu sein.

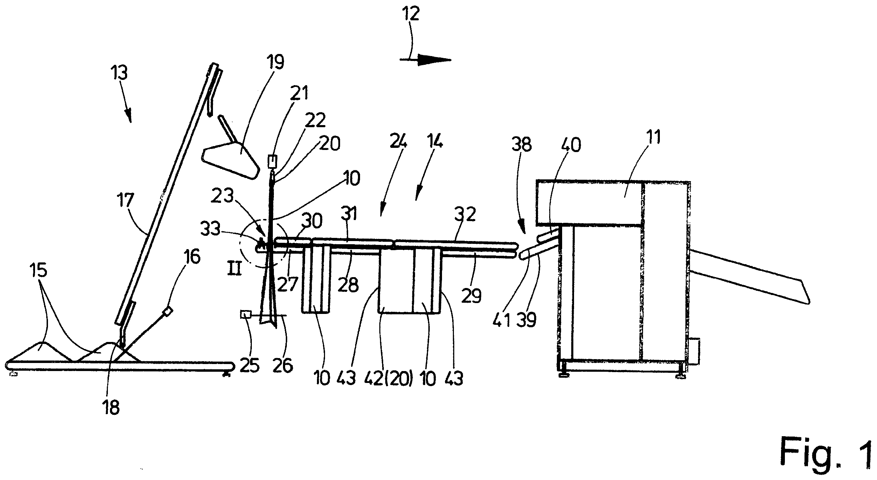

Zur automatischen Übergabe des von der Bereitstellungseinrichtung 19 ausgestreckten Wäschestücks 10 an die Eingabemaschine 11 ist das zur Eingabemaschine 11 weisende Ende der Fördererkaskade 24 direkt vor einem Beladeförderer 38 der Eingabemaschine 11 angeordnet. Der Beladeförderer 38 ist im in der Fig. 1 gezeigten Ausführungsbeispiel gebildet aus einem unteren Gurtförderer 39 und einem sandwichartig darüber angeordneten oberen Gurtförderer 40. Beide Gurtförderer 39 und 40 sind vorzugsweise so breit wie die Gurtförderer 27 bis 32 der Fördererkaskade 24, so dass von der Fördererkaskade 24 das auseinandergezogene und noch in einer U-förmigen Konfiguration auf der Fördererkaskade 24 liegende Wäschestück 10 in dieser U-förmigen Konfiguration automatisch an den Beladeförderer 38 übergebbar ist.

Im gezeigten Ausführungsbeispiel ist der untere Gurtförderer 39 des Beladeförderers 38 der Eingabemaschine 10 etwas länger als der obere Gurtförderer 40, indem der untere Gurtförderer 39 in Richtung zur Fördererkaskade 24 gegenüber dem oberen Gurtförderer 40 vorsteht zur Bildung eines Übergabebereichs 41, auf dem das Wäschestück 10 von der Fördererkaskade 24 der Ausstreiteinrichtung 14 automatisch übergebbar ist. Die Eingabemaschine 11 kann einen Beladeförderer 38 oder mehrere mit Abstand nebeneinanderliegende Beladeförderer 38 aufweisen. Bei mehreren nebeneinanderliegenden Beladeförderern 38 ist für jeden Beladeförderer 38 eine Ausstreifeinrichtung 14 vorgesehen. Gegebenenfalls kann auch noch jeder Ausstreifeinrichtung 14 ein Vereinzeler 13 mit einer Bereitstellungseinrichtung 19 zugeordnet sein. Es ist auch denkbar, mit einem Vereinzeler 13 sämtliche nebeneinander angeordnete Ausstreifeinrichtungen 14 abwechselnd mit Wäschestücken 10 zu versorgen, indem die Schiene 21 eine solche Länge aufweist, dass sie sich vor allen nebeneinanderliegenden Ausstreifeinrichtungen 14 entlang erstreckt. Auch ist es denkbar, nur eine einzige Ausstreifeinrichtung 14 vorzusehen, die abwechselnd alle Beladeförderer 38 der Eingabemaschine 11 und Wäschestücken 10 versorgt.

Nachfolgend wird das erfindungsgemäße Verfahren anhand der in den Fig. 1 bis 3 gezeigten Vorrichtung erläutert:
Das jeweilige Wäschestück 10 wird von der Ausstreifeinrichtung 14 vor dem automatischen Übergeben an die Eingabemaschine 11 in Zuführrichtung 12 auseinandergezogen bzw. gestreckt. Dazu wird das Wäschestück 10 zunächst im noch zusammengerafften Zustand, insbesondere wenn es noch schlauchartig ist, in einer U-förmigen Konfiguration über den Ablegebereich 23 der Fördererkaskade 24 der Ausstreifeinrichtung 14 abgelegt.

Vor dem Ablegen des Wäschestücks 10 in einer U-förmigen Konfiguration auf dem Ablegebereich 23 hängt das Wäschestück 10 ausgehend von einer ersten Ecke 20 von der an der Schiene 21 verfahrbaren Klammer 22 herunter. Dabei wird von der Lichtschranke, beispielsweise dem Sensorstrahl 26 des Sensors 25, beim seitlichen Heranfahren des Wäschestücks 10 an den Ablegebereich 23 durch Verfahren der Klammer 22 quer zur Zuführrichtung 12 an der Schiene 21 das unterste Ende des Wäschestücks 10 detektiert und daraus rechnerisch ungefähr das Maß ermittelt, wie weit das untere Ende des Wäschestücks 10 von der Klammer 22 herunterhängt. Das Wäschestück 10 wird nun von längs in der Schiene 21 verfahrbaren Klammer 22 weiter quer zur Zuführrichtung 12 bewegt, bis etwa die Hälfte des rechnerisch ermittelten Maßes des Abstands des unteren Endes des Wäschestücks 10 von der Klammer 22 sich über bzw. auf dem Ablegebereich 23 befindet. Dieses Maß entspricht der halben Länge oder Breite des Wäschestücks 10 quer zur Zuführrichtung 12. Durch Öffnen der Klammer 23 wird nun das Wäschestück 10 von derselben gelöst, wobei sich das Wäschestück 10 automatisch in einer U-förmigen Konfiguration auf dem Ablegebereich 23 ablegt. Dann ragen gegenüberliegende, vorzugsweise etwa gleich lange, endseitige Teilbereiche des Wäschestücks 10 auf beiden Seiten vom Ablegebereich 23 herunter, während ein schmaler mittlerer Teil des Wäschestücks 10 auf dem Ablegebereich 23 liegt.

Ausgehend von dem in der U-förmigen Konfiguration auf dem Auflegebereich 23 abgelegten Wäschestück 10 erfolgt nun das automatische Auseinanderziehen bzw. Ausstreifen des Wäschestücks 10 in Zuführrichtung 12 mittels der Ausstreifeinrichtung 14 bei in Zuführrichtung 12 angetriebenen Gurtförderern 27 bis 32 der Fördererkaskade 24. Es wird dazu zunächst von der Rückhalteeinrichtung 33 bei gegen das Wäschestück 10 geschwenktem Klemmfinger 34 ein zur Rückhalteeinrichtung 33 weisender hinterer Bereich des auf dem Ablegebereich 23 liegenden mittleren Teils des Wäschestücks 10 temporär und/oder anfänglich festgeklemmt und dadurch mindestens für das anfängliche Auseinanderziehen des Wäschestücks 10 zurückgehalten. Nach dem Festklemmen des Wäschestücks 10 auf dem Ablegebereich 23 durch Aktivieren des Klemmfingers 34 wird der Antrieb der Gurtförderer 27 bis 32 der Fördererkaskade 24 gestartet.

Der Antrieb der paarweise übereinanderliegenden Gurtförderer 27 bis 32 erfolgt in Zuführrichtung 12 gesehen mit zunehmender, vorzugsweise stufenweise zunehmender, Fördergeschwindigkeit. Dazu ist die Umlaufgeschwindigkeit der Trume der mittleren übereinanderliegenden Gurtförderer 28, 30 größer als die Umlaufgeschwindigkeit der zueinander weisenden Trume des Paars der anfänglichen Gurtförderer 27 und 30. Die Umlaufgeschwindigkeit der Trume des in Zuführrichtung 12 letzten Paars übereinanderliegender Gurtförderer 29 und 32 ist auch größer als die Umlaufgeschwindigkeit der Trume der übereinanderliegenden Gurtförderer 28 und 31 des mittleren Gurtförderpaars. Durch diese stufenweise in Zuführrichtung 12 zunehmende Transportgeschwindigkeit der Gurtförderer 27 bis 32 wird das Wäschestück 10 beim Weitertransport des Wäschestücks 10 von den Gurtförderern 27 bis 32 in Zuführrichtung 12 nach und nach auseinandergezogen. An diesem Auseinanderziehen ist maßgeblich beteiligt ein Schlupf desjenigen Abschnitts des Wäschestücks 10, der zwischen langsamer laufenden Paaren von Gurtförderern 27 und 30 bzw. 28 und 31 liegt.

Sobald das Auseinanderziehen des Wäschestücks 10 so weit fortgeschritten ist, dass die vom Klemmfinger 34 der Rückhalteeinrichtung 33 ausgeübte Kraft auf den gehaltenen Teil des Wäschestücks 10 ein bestimmtes Ausmaß angenommen hat, wird der Klemmfinger 34 vom Wäschestück 10 gelöst durch Hochschwenken vom Pneumatikzylinder 36 in die in der Fig. 2 gezeigte Ausgangsstellung. Alternativ kann es auch vorgesehen sein, dass das Wäschestück 10 mit fortgeschrittenem Ausbreiten, insbesondere Auseinanderziehen, sich selbsttätig vom Klemmfinger 34 der Rückhalteeinrichtung 33 löst, indem der ursprünglich vom Klemmfinger 34 gehaltene Teil des Wäschestücks 10 unter dem Klemmfinger 34 weggezogen wird.

Spätestens wenn eine in Zuführrichtung 12 voraneilende, quergerichtete Kante 43 des Wäschestücks 10 den zur Eingabemaschine 11 weisenden Endbereich des letzten Paars übereinanderliegender Gurtförderer 29 und 32 erreicht hat, hat die Ausstreifeinrichtung 14 das Wäschestück 10 vollständig oder zumindest in einem zur automatischen Übergabe an die Eingabemaschine 11 ausreichenden Umfange auseinandergezogen und/oder gestreckt. Es erfolgt dann eine automatische Übergabe des auseinandergezogenen Wäschestücks 10 von der Ausstreifeinrichtung 14 an den Beladeförderer 38 der Eingabemaschine 11, und zwar vorzugsweise an den Übergabebereich 41 des unteren Gurtförderers 39 des Beladeförderers 38. Diese Übergabe erfolgt mit vorn liegender Querkante 43, die beidseitig von benachbarten Ecken des Wäschestücks 10 begrenzt wird.

Je nach Ausbildung der Eingabemaschine 11 wird von einer in den Figuren nicht gezeigten Spreizeinrichtung derselben entweder die voraneilende Querkante 43 oder die nacheilende Querkante 43 des Wäschestücks 10 gespreizt, wobei durch Auseinanderfahren der Spreizklammern der Spreizeinrichtung benachbarte Ecken 20 und 42 der hinteren Querkante 43 oder benachbarte Ecken der vorderen Querkante 43 quer zur Zuführrichtung 12 auseinandergezogen und dabei das Wäschestück 10 vollständig ausgebreitet wird zum Überführen des Wäschestücks 10 im ausgebreiteten Zustand von der Eingabemaschine 11 an die nachgeordnete Mangel oder sonstige Wäschebehandlungsmaschine.

Es ist ein alternatives Verfahren denkbar, bei dem die ersten beiden übereinanderliegenden Gurtförderer 27 und 30 der Fördererkaskade 24 reversierbar sind, und zwar mindestens kurzzeitig während des anfänglichen Auseinanderziehens des Wäschestücks 10. Dann wird das Wäschestück 10 von den Gurtförderern 27 und 30 anfänglich entgegen der Zuführrichtung 12 transportiert, während die nachfolgenden Gurtförderer 28 und 31 sowie 29 und 32 so angetrieben werden, dass sie das Wäschestück 10 in Zuführrichtung 12 weitertransportieren. Der gegensinnige Antrieb der ersten Gurtförderer 27 und 30 entgegengesetzt zur Zuführrichtung 12 kann nicht nur während des anfänglichen Auseinanderziehens des Wäschestücks 10 erfolgen, sondern gegebenenfalls auch während des gesamten Auseinanderziehens des Wäschestücks 10. In diesem letztgenannten Fall werden die ersten übereinanderliegenden Gurtförderer 27 und 30 ständig gegen die Zuführrichtung 12 angetrieben.

Bei in vorstehend beschriebener Weise reversierbaren oder ständig entgegengesetzt zur Zuführrichtung 12 angetriebenen ersten übereinanderliegenden Gurtförderern 27 und 30 kann die Rückhalteeinrichtung 33 mit dem verschwenkbaren Klemmfinger 34 entfallen.

### Bezugszeichenliste:

| | | | |
|---|---|---|---|
| 10 | Wäschestück | 42 | zweite Ecke |
| 11 | Eingabemaschine | 43 | Kante |
| 12 | Zuführrichtung | | |
| 13 | Vereinzeler | | |
| 14 | Ausstreifeinrichtung | | |
| 15 | Wäschehaufen | | |
| 16 | Kamera | | |
| 17 | Steigstrecke | | |
| 18 | Greifer | | |
| 19 | Bereitstellungseinrichtung | | |
| 20 | erste Ecke | | |
| 21 | Schiene | | |
| 22 | Klammer | | |
| 23 | Ablegebereich | | |
| 24 | Fördererkaskade | | |
| 25 | Sensor | | |
| 26 | Sensorstrahl | | |
| 27 | unterer Gurtförderer | | |
| 28 | unterer Gurtförderer | | |
| 29 | unterer Gurtförderer | | |
| 30 | oberer Gurtförderer | | |
| 31 | oberer Gurtförderer | | |
| 32 | oberer Gurtförderer | | |
| 33 | Rückhalteeinrichtung | | |
| 34 | Klemmfinger | | |
| 35 | Drehachse | | |
| 36 | Pneumatikzylinder | | |
| 37 | Leitblech | | |
| 38 | Beladeförderer | | |
| 39 | unterer Gurtförderer | | |
| 40 | oberer Gurtförderer | | |
| 41 | Übergabebereich | | |

## Patentansprüche

1. Verfahren zum Zuführen von Wäschestücken (10) zu einer Eingabemaschine (11) zum Ausbreiten und Eingeben des Wäschestücks mit zwei benachbarten Ecken (20, 42) einer voraneilenden Kante (43) in eine Wäschebehandlungseinrichtung, insbesondere eine Mangel, wobei das vorzugsweise automatisch vereinzelte Wäschestück (10) der Eingabemaschine (11) zugeführt wird, **dadurch gekennzeichnet, dass** am vereinzelten Wäschestück (10) vor der Zuführung desselben zur Eingabemaschine (11) zwei benachbarte Ecken (20, 42) einer Kante (43) ausgebildet werden, wobei das Wäschestück (10) in eine U-artige Konfiguration gebracht und dabei in Richtung der Eingabe des Wäschestücks (10) in die Wäschebehandlungseinrichtung auseinandergezogen wird, indem das Wäschestück (10) von mindestens einer Klammer (22) über eine das Wäschestück (10) auseinanderziehende Ausstreifeinrichtung (14) gezogen und nachfolgend die Klammer (22) geöffnet und dabei das Wäschestück (10) mit einem mittigen oder mittennahen Bereich über einen Ablegebereich (23) der Ausstreifeinrichtung (14) abgelegt wird zur Herbeiführung der U-artigen Konfiguration mit auf beiden Seiten vom Abgelegebereich (23) herunterhängenden Endabschnitten des Wäschestücks (10), und dass in der Ausstreifeinrichtung (14) das Wäschestück (10) von mindestens zwei in Zuführrichtung (12) aufeinanderfolgenden sowie hintereinander und übereinander angeordneten Gurtförderern (27 bis 32), die mindestens teilweise mit unterschiedlichen in Zuführrichtung (12) gesehen zunehmenden Transportgeschwindigkeiten betrieben werden, beim Transport in Zuführrichtung (12) zur Eingabemaschine (11) auseinandergezogen wird.

2. Verfahren nach Anspruch 1, **dadurch gekennzeichnet, dass** das an der Klammer (22) hängende Wäschestück (10) durch ein quergerichtet zur Zuführrichtung (12) des Wäschestücks (10) zur Eingabemaschine (11) erfolgendes Verfahren der Klammer (22) und ein Lösen von derselben beim sich auf einem Ablegebereich (23) der Ausstreifeinrichtung (14) befindenden mittleren oder mittennahen Bereich des Wäschestücks (10) abgelegt wird und dabei das Wäschestück in eine U-artige Konfiguration gebracht wird.

3. Verfahren nach Anspruch 1 oder 2, **dadurch gekennzeichnet, dass** die Ausstreifeinrichtung (14) eine Fördererkaskade (24) aufweist, wobei vorzugsweise die Fördererkaskade (24) mindestens zwei in Zuführrichtung (12) aufeinanderfolgende Förderpaare, insbesondere sandwichartig übereinander angeordnete Gurtförderer (27 bis 32), aufweist, von denen das Wäschestück (10) mindestens in Zuführrichtung (12) zur Eingabemaschine (11) transportiert und dabei auseinandergezogen wird.

4. Verfahren nach einem der vorhergehenden Ansprüche, **dadurch gekennzeichnet, dass** das Wäschestück (10) in einer U-förmigen Konfiguration auf einen ersten bzw. anfänglichen Gurtförderer (27) der Fördererkaskade (24) der Ausstreifeinrichtung (14) aufgezogen und vorzugsweise an der Stelle, wo es auf den anfänglichen Gurtförderer (27) aufgezogen worden ist, ein äußerer und/oder außenliegender Bereich des Wäschestücks (10), während mindestens des anfänglichen Auseinanderziehens desselben zurückgehalten wird.

5. Verfahren nach einem der vorhergehenden Ansprüche, **dadurch gekennzeichnet, dass** ein erster Gurtförderer (27) mindestens während des anfänglichen Auseinanderziehens des Wäschestücks (10) gegen die Zuführrichtung (12) und/oder gegensinnig zu den oder jeden auf den ersten Gurtförderer (27) folgenden Gurtförderern (28 bis 32) angetrieben wird zum Zurückhalten des Wäschestücks (10) mindestens beim anfänglichen Auseinanderziehen durch den oder die übrigen Gurtförderer (28 bis 32).

6. Vorrichtung zum Zuführen von Wäschestücken (10) zu einer Eingabemaschine (11) zum Ausbreiten und Eingeben des Wäschestücks (10) mit zwei benachbarten Ecken (20, 42) einer voraneilenden Kante (43) in eine Wäschebehandlungseinrichtung, insbesondere eine Mangel, mit mindestens einem Förderer, der das jeweiligen Wäschestück (10) in Zuführrichtung (12), in der die Eingabemaschine (11) das Wäschestück (10) zur Wäschebehandlungseinrichtung transportiert, zur Eingabemaschine (11) transportiert, **gekennzeichnet durch** einen Förderer mit mindestens einer Klammer (22) zum Anhängen jeweils eines Wäschestücks (10) und Ablegen des Wäschestücks (10) mit einem mittigen oder mittennahen Bereich über einen vorderen Ablegebereich (23) einer das Wäschestück (10) auseinanderziehenden Ausstreifeinrichtung (14) nach dem Öffnen der Klammer (22), und einer sich in Zuführrichtung (12) zur Eingabemaschine (11) erstreckenden Fördererkaskade (24), die den vorderen Ablegebereich (23) und in Zuführrichtung (12) zur Wäschebehandlungseinrichtung hintereinander und übereinander angeordnete Gurtförderer (27 bis 32) aufweist, wobei in Zuführrichtung (12) die Transportgeschwindigkeit der Gurtförderer (27 bis 32) der Fördererkaskade (24) zunimmt.

7. Vorrichtung nach Anspruch 6, **dadurch gekennzeichnet, dass** in der Fördererkaskade (24) Gurtförderer (27 bis 23) sowohl aufeinanderfolgend als auch übereinanderliegend angeordnet sind, vorzugsweise mindestens zwei übereinanderliegende Paare unterer Gurtförderer (27, 28, 29) und oberer Gurtförderer (30, 31, 32) gebildet sind.

8. Vorrichtung nach Anspruch 6 oder 7, **dadurch gekennzeichnet, dass** der erste Gurtförderer (27) oder das erste Gurtfördererpaar (27, 30) dauernd oder zumindest kurzzeitig entgegen der Zuführrichtung (12) antreibbar ist.

9. Vorrichtung nach einem der Ansprüche 6 bis 8, **dadurch gekennzeichnet, dass** einem ersten unteren Gurtförderer (27), insbesondere einem einen Ablegebereich 23 bildenden Anfangsbereich desselben, eine Rückhalteeinrichtung (33) für einen hinteren Teil des auf dem ersten Gurtförderer (27) liegenden Bereichs des Wäschestücks (10) zugeordnet ist.

10. Vorrichtung nach Anspruch 9, **dadurch gekennzeichnet, dass** eine Steuerung die Rückhalteeinrichtung (33) derart steuert, dass sie den hinteren Bereich des Wäschestücks (10) derart festhält, bis der mindestens eine auf den ersten Gurtförderer (27) folgende Gurtförderer (28, 31), insbesondere ein Paar übereinanderliegender Gurtförderer (28, 31), eine bestimmte Zugkraft auf den von der Rückhalteeinrichtung (33) gehaltenen Bereich des Wäschestücks ausübt.

## Claims

1. A method for supplying items of laundry (10) to a feeding machine (11) for spreading out and feeding the item of laundry by two adjacent corners (20, 42) of a leading edge (43) into a laundry treatment device, in particular a mangle, the preferably automatically separated item of laundry (10) being supplied to the feeding machine (11), **characterized in that** two adjacent corners (20, 42) of an edge (43) are formed on the separated item of laundry (10) before the latter is supplied to the feeding machine (11), wherein the item of laundry (10) is brought into a U-like configuration and, in the process, being stretched apart in the direction of feeding of the item of laundry (10) into the laundry treatment device by the item of laundry (10) being pulled by at least one clip (22) over a spreading device (14), which stretches the item of laundry (10) apart, and then the clip (22) is opened, with the item of laundry (10) being deposited with a central region or close to centre region on a depositing region (23) of the spreading device (14) in order to bring about the U-like configuration with end portions of the item of laundry (10) hanging down on both sides from the depositing region 23, and **in that** the piece of laundry (10) is pulled apart in the spreading device (14) by at least two belt conveyors (27 to 32) which follow one another in the supply direction (12) and are arranged one behind the other and one above the other and which are operated at least partially at different increasing transport speeds as seen in the supply direction (12), during transport in the supply direction (12) to the feeding machine (11).

2. The method as claimed in claim 1, **characterized in that** the item of laundry (10) hanging on the clip (22) is deposited with the central region or close to centre region of the item of laundry (10) on a depositing region (23) of the spreading device (14) by a movement of the clip (22) in a transverse direction with respect to the supply direction (12) of the item of laundry (10) to the feeding machine (11) and release of said clip, and, in the process, the item of laundry is brought into a U-like configuration.

3. The method as claimed in claim 1 or 2, **characterized in that** the spreading device (14) has a conveyor cascade (34), wherein the conveyor cascade (24) preferably has at least two pairs of conveyors which follow one another in the supply direction (12), in particular belt conveyors (28 to 32) arranged one above another in the manner of a sandwich, and by which the item of laundry (10) is transported at least in the supply direction (12) to the feeding machine (11) and, in the process, is stretched apart.

4. The method as claimed in any one of the previous claims, **characterized in that** the item of laundry (10) is pulled in a U-shaped configuration onto a first or initial belt conveyor (27) of the conveyor cascade (24) of the spreading device (14) and, preferably at the location at which it has been pulled onto the initial belt conveyor (27), an outer and/or outermost region of the item of laundry (10) is held back during at least the initial stretching apart of same.

5. The method as claimed in any one of the preceding claims, **characterized in that** a first belt conveyor (27) is driven counter to the supply direction (12) and/or in the opposite direction to the or each belt conveyor (28 to 32) following the first belt conveyor (27) at least during the initial stretching apart of the item of laundry (10) in order to hold back the item of laundry (10) at least during the initial stretching apart by the other belt conveyor or conveyors(28 to 32).

6. An apparatus for supplying items of laundry (10) to a feeding machine (11) for spreading and feeding the item of laundry (10) by two adjacent corners (20, 42) of a leading edge (43) into a laundry treatment device, in particular a mangle, with at least one conveyor which transports the respective item of laundry (10) in the supply direction (12), in which the feeding machine (11) transports the item of laundry (10) to the laundry treatment device, to the feeding machine (11), **characterized by** a conveyor with at least one clip (22) for hanging up a respective item of laundry (10) and depositing the item of laundry (10) with a central region or close to centre region on a front depositing region (23) of a spreading device (14) which stretches apart the item of laundry (10) after the clip (22) has been opened, and a conveyor cascade (24) extending in the supply direction (12) to the feeding machine (11), which has the front depositing area (23) and belt conveyors (27 to 32) arranged one behind the other and one above the other in the supply direction (12) to the laundry treatment device, wherein the transport speed of the conveyor cascade (24) increases in the supply direction (12).

7. The apparatus as claimed in claim 6, **characterized in that** belt conveyors (27 to 23) both following one another and also lying one above another are arranged in the conveyor cascade (24), preferably at least two pairs of lower belt conveyors (27, 28, 29) and upper belt conveyors (30, 31, 32) lying one above another are formed.

8. The apparatus as claimed in claim 6 or 7, **characterized in that** the first belt conveyor (27) or the first pair of belt conveyors (27, 30) can be driven permanently or at least temporarily counter to the supply direction (12).

9. The apparatus as claimed in one of the claims 6 to 8, **characterized in that** a retaining device (33) for a rear part of that region of the item of laundry (10) which is lying on the first belt conveyor (27) is assigned to a first lower belt conveyor (27), in particular to a starting region forming a depositing region (23).

10. The apparatus as claimed in claim 9, **characterized in that** a controller controls the retaining device (33) in such a manner that it secures the rear region of the item of laundry (10) until the at least one belt conveyor (28, 31) following the first belt conveyor (27), in particular a pair of belt conveyors (28, 31) lying one above another, exerts a certain tensile force on that region of the item of laundry which is held by the retaining device (33).

## Revendications

1. Procédé pour amener des pièces de linge (10) à une machine d'introduction (11) pour étaler et introduire la pièce de linge avec deux coins (20, 42) voisins d'un bord avant (43) dans un dispositif de traitement de linge, notamment une calandre, la pièce de linge (10), de préférence séparée automatiquement, étant amenée à la machine d'introduction (11), **caractérisé en ce que,** sur la pièce de linge (10) séparée, deux coins (20, 42) voisins d'un bord (43) sont réalisés avant l'amenée de celle-ci à la machine d'introduction (11), la pièce de linge (10) étant mise dans une configuration de type U et étant alors écartée en direction de l'introduction de la pièce de linge (10) dans le dispositif de traitement de linge, en tirant la pièce de linge (10) par au moins une pince (22) au-dessus d'un dispositif d'étirage (14) qui écarte la pièce de linge (10) et en ouvrant ensuite la pince (22) et en déposant ainsi la pièce de linge (10) avec une zone centrale ou proche du centre au-dessus d'une zone de dépôt (23) du dispositif d'étirage (14) pour obtenir la configuration de type U avec des sections d'extrémité de la pièce de linge (10) qui pendent des deux côtés de la zone de dépôt (23), et **en ce que**, dans le dispositif d'étirage (14), la pièce de linge (10) est écartée lors du transport dans la direction d'amenée (12) vers la machine d'introduction (11) par au moins deux convoyeurs à courroie (27 à 32) se succédant dans la direction d'amenée (12) et agencés les uns derrière les autres et les uns au-dessus des autres, qui fonctionnent au moins partiellement à des vitesses de transport différentes qui augmentent dans la direction d'amenée (12) .

2. Procédé selon la revendication 1, **caractérisé en ce que** la pièce de linge (10) suspendue à la pince (22) est déposée par un déplacement de la pince (22) transversalement à la direction d'amenée (12) de la pièce de linge (10) vers la machine d'introduction (11) et un dégagement de celle-ci lorsque la zone centrale ou proche du centre de la pièce de linge (10) se trouve sur une zone de dépôt (23) du dispositif d'étirage (14), et la pièce de linge est ainsi mise dans une configuration de type U.

3. Procédé selon la revendication 1 ou 2, **caractérisé en ce que** le dispositif d'étirage (14) présente une cascade de convoyeurs (24), la cascade de convoyeurs (24) présentant de préférence au moins deux paires de convoyeurs se succédant dans la direction d'amenée (12), notamment des convoyeurs à courroie (27 à 32) agencés en sandwich les uns au-dessus des autres, par lesquels la pièce de linge (10) est transportée au moins dans la direction d'amenée (12) vers la machine d'introduction (11) et est ainsi écartée.

4. Procédé selon l'une quelconque des revendications précédentes, **caractérisé en ce que** la pièce de linge (10) est enfilée dans une configuration en forme de U sur un premier convoyeur à courroie ou convoyeur à courroie initial (27) de la cascade de convoyeurs (24) du dispositif d'étirage (14) et, de préférence, à l'emplacement où elle a été enfilée sur le convoyeur à courroie initial (27), une zone extérieure et/ou située à l'extérieur de la pièce de linge (10) est retenue pendant au moins l'écartement initial de celle-ci.

5. Procédé selon l'une quelconque des revendications précédentes, **caractérisé en ce qu'**un premier convoyeur à courroie (27) est entraîné, au moins pendant l'écartement initial de la pièce de linge (10), à l'encontre de la direction d'amenée (12) et/ou dans le sens inverse du ou de chaque convoyeur à courroie (28 à 32) suivant le premier convoyeur à courroie (27), pour retenir la pièce de linge (10) au moins lors de l'écartement initial par le ou les autres convoyeurs à courroie (28 à 32).

6. Dispositif pour amener des pièces de linge (10) à une machine d'introduction (11) pour étaler et introduire la pièce de linge (10) avec deux coins (20, 42) voisins d'un bord avant (43) dans un dispositif de traitement de linge, notamment une calandre, avec au moins un convoyeur qui transporte la pièce de linge respective (10) vers la machine d'introduction (11) dans la direction d'amenée (12) dans laquelle la machine d'introduction (11) transporte la pièce de linge (10) vers le dispositif de traitement de linge, **caractérisé par** un convoyeur avec au moins une pince (22) pour suspendre respectivement une pièce de linge (10) et déposer la pièce de linge (10) avec une zone centrale ou proche du centre au-dessus d'une zone de dépôt avant (23) d'un dispositif d'étirage (14) écartant la pièce de linge (10) après l'ouverture de la pince (22), et une cascade de convoyeurs (24) s'étendant dans la direction d'amenée (12) vers la machine d'introduction (11), qui présente la zone de dépôt avant (23) et des convoyeurs à courroie (27 à 32) agencés les uns derrière les autres et les uns au-dessus des autres dans la direction d'amenée (12) vers le dispositif de traitement de linge, la vitesse de transport des convoyeurs à courroie (27 à 32) de la cascade de convoyeurs (24) augmentant dans la direction d'amenée (12).

7. Dispositif selon la revendication 6, **caractérisé en ce que** dans la cascade de convoyeurs (24), les convoyeurs à courroie (27 à 23) sont agencés à la fois en se succédant et en se superposant, de préférence au moins deux paires superposées de convoyeurs à courroie inférieurs (27, 28, 29) et de convoyeurs à courroie supérieurs (30, 31, 32) étant formées.

8. Dispositif selon la revendication 6 ou 7, **caractérisé en ce que** le premier convoyeur à courroie (27) ou la première paire de convoyeurs à courroie (27, 30) peut être entraîné (e) en permanence ou au moins brièvement à l'encontre de la direction d'amenée (12).

9. Dispositif selon l'une quelconque des revendications 6 à 8, **caractérisé en ce qu'**un dispositif de retenue (33) pour une partie arrière de la zone de la pièce de linge (10) située sur le premier convoyeur à courroie (27) est associé à un premier convoyeur à courroie inférieur (27), notamment à une zone initiale de celui-ci formant une zone de dépôt.

10. Dispositif selon la revendication 9, **caractérisé en ce qu'**une commande commande le dispositif de retenue (33) de manière à maintenir la zone arrière de la pièce de linge (10) jusqu'à ce que l'au moins un convoyeur à courroie (28, 31) suivant le premier convoyeur à courroie (27), notamment une paire de convoyeurs à courroie (28, 31) superposés, exerce une force de traction déterminée sur la zone de la pièce de linge maintenue par le dispositif de retenue (33).
